Europäisches Patentamt

European Patent Office

Office européen des brevets

(11) Publication number: **0 080 201**
**A1**

## (12) EUROPEAN PATENT APPLICATION

(21) Application number: 82110775.2

(22) Date of filing: 22.11.82

(51) Int. Cl.³: **H 04 B 3/23**

(30) Priority: 24.11.81 IT 6852181

(71) Applicant: **CSELT Centro Studi e Laboratori Telecomunicazioni S.p.A., Via Guglielmo Reiss Romoli, 274, I-10148 Turin (IT)**

(43) Date of publication of application: 01.06.83
Bulletin 83/22

(72) Inventor: **di Tria, Paolo, C. so Sebastopoli, 310, Torino (IT)**
Inventor: **Zoso, Luciano, Via Moffa di Lisio, 8, Torino (IT)**

(84) Designated Contracting States: **CH DE FR GB LI NL SE**

(74) Representative: **Riederer Freiherr von Paar zu Schönau, Anton et al, Müllerstrasse 31, D-8000 München 5 (DE)**

(54) Method of and device for passband echo-cancelling for phase-modulated data signals.

(57) Echo-cancelling method in the passband, i.e. on the whole Nyquist band of the transmitted signal, for two-wire full-duplex phase-modulation data transmission system, apt to generate, modulate and add together an in-phase component and a quadrature component of the baseband equivalent echo-signal, thus obtaining a passband equivalent echo signal to be subtracted from the signal at the receiving side upstream the receiving device. The error signal obtained in this way is still used for the recursive updating of the coefficients present in the expressions of said in-phase and quadrature components. The device which carries out this method is composed of four adaptive transversal digital filters (FT) and two adders (53, 54) for the generation of the two baseband echo-signal components, two modulators (MOD 3, MOD 4) and an adder (55) for generating the passband equivalent echo-signal.

*Patentanwalt*

*Dipl.-Ing. Anton Freiherr* *Riederer von Paar*

Müllerstraße 31
D-8000 München 5

☎ München (089) 26 60 60
Telex 523 903 claim d
† claims München

0080201

CSELT
Centro Studi e Laboratori
Telecomunicazioni S.p.A.
Via Guglielmo Reiss Romoli, 274
I- 10148 Turin, Italy

## METHOD OF AND DEVICE FOR PASSBAND ECHO-CANCELLING FOR PHASE-MODULATED DATA SIGNALS

## Description

The present invention relates to devices for full-duplex data transmission over two-wire telephone lines, and more particularly it relates to a method and device for passband echo-cancelling for phase-modulated data signals.

In the domain of the studies relating to new devices apt to the full-duplex data transmission on conventional subscriber telephone lines, the problems concerning the bandwidth and transmission rate become more and more serious, as also the general criteria of compatibility with the already existing network of analog type are to be taken into account.

In fact the analog telephone network has already occupied the frequency band for the speech signal and services such as teletaxe (pulses at a 12 kHz frequency); in addition the frequency band exceeding 160 kHz is occupied by transmissions as wire broadcasting.

A further problem resides in the presence over the telephone line of pulse noises, whose spectral distribution is wide and decreases with the increase of the frequency; these pulse noises being generated during the phases of selection and engagement of the line; consequently it becomes necessary to transmit the data in high enough frequency bands with respect to the baseband so that they may be affected as little as possible by said noises.

Hence the frequency band available for data transmission is narrow and translated with respect to the baseband, owing to the above-expounded problems.

The most widely used methods for a full-duplex data transmission on two-wire telephone lines are basically the following:

- a first method based on the use of different frequency bands for the two transmission directions, from and towards the subscriber (FDM method, i..e. frequency-division multiplex);

- a second method based on the alternate transmission on both directions at subsequent time intervals, (TDM method, i. e. time-division multiplex);

- a third method based on the simultaneous transmission in both directions and over the same frequency band (echo cancelling method).

This last method is the most suited to meet the above-mentioned compatibility requirements as it allows a more limited band occupation with respect to that necessary to the first two methods.

The devices implementing the data transmission on the usual telephone lines are generally referred to as "modems". They are generally placed at the two ends of the lines and consist each of a transmitter and a receiver.

In addition, in case the third transmission method were to be used, each modem comprises a usual hybrid to access the line. Owing to unavoidable constructive imperfections of the hybrid, a portion of the signal transmitted by a modem at one of the line ends is conveyed towards the receiver of the same modem, instead of being directed to the receiver of the modem placed at the other line end. In addition the imperfections and impedance mismatchings along the telephone line cause reflections of a signal portion transmitted by a modem, towards the receiver of the same modem.

Then said modem comprises a further device, called echo-canceller, apt to cancel from the signal received by its own receiver

- 3 -

these unwanted signal portions, which are commonly identified by the term "echo signal".

Embodiments of echo-cancellers for modems for transmission and reception of base-band signals are known in the art.

Said echo-cancellers basically consist of a usual digital transversal filter to whose input a signal is sent derived from the transmitter of the modem, and at whose output a signal is present, supplied to the receiver of the modem and simulating as well as possible the echo signal.

Said signal supplied to the receiver is then subtracted in the receiver itself from the signal coming from the hybrid. Thus, the so-called error signal is obtained, purged from the echo-signal and representing the effective useful signal.

The error signal is also sent back to the echo-canceller to contribute to the determination of the transversal filter coefficients. Said echo-cancellers are not suited to passband signal transmission and reception modems.

One embodiment of an echo-canceller for passband signals is already known in the technique and is described in the Patent No. 4074086 granted in the United States on the 14th February, 1978. In this embodiment the error signal to be sent to the echo-canceller is extracted in the receiver after the demodulator, associating from this viewpoint said kind of canceller with the baseband ones.

This makes the receiver operation extremely critical. In fact, the circuit inside the receiver, which has to extract the synchronism signal from the signal received from the transmitter of the modem placed at the other end of the line, is compelled to use the signal present at the output of the hybrid, i. e. the signal still comprising the echo signal. Since the echo signal is often much higher than the useful signal coming from the opposite line end, it is clear that said operation of synchronism extraction is extremely difficult and is often impossible.

Then a modem using said echo canceller must undergo stringent limitations as to the maximum tolerable ratio between the echo signal and the whole signal at the receiver input.

A further disadvantage of this embodiment is that it requires the starting transmission phase to be complicated by separate time intervals of half-duplex operation.

A further conceptual limit of this kind of embodiment is that the possible intersymbol interference caused by channel distorsion on the arriving signal cannot be distinguished from the echo component; this is to be overcome by introducing an adaptive equalization device which is to cancel the intersymbol component on the error signal.

This can be overcome by the present invention of a method of and a device for the passband echo-cancelling on the whole Nyquist band of the transmitted signal, for phase modulated data signals, which avoids the limitations of the maximum tolerable ratio between the echo signal and the whole signal at the receiver input, which also avoids the initial half-duplex operation phase and does not require the introduction of a further adaptive equalization structure inside the receiver.

It is a particular object of the present invention a passband echo-cancelling method in a transmission and reception system of phase-modulated data signals on a two-wire line, said transmission system splitting the baseband data signal, prior to modulation, into a first and a second components, said first and second components being in-phase and quadrature projections, with respect to a determined phase reference, of said baseband data signal and having a determined bit-period, which method comprises the steps of: generating a first and a second estimate signals of baseband equivalent echo-signal, said first and second estimate signals being in--phase and quadrature components, with respect to said assigned phase reference, of said baseband equivalent echo - signal and being extracted by means of the convolution products of said first and second baseband data signal components with a first and second series of coefficients subjected to a periodic updating and identified by a current variable k; amplitude modulating a first carrier signal C1 by said first estimate signal; amplitude modulating a second carrier signal C2, in quadrature with respect to said first carrier signal, by said second estimate signal; summing the two modulated signals so as to generate a modulated estimate signal of the passband echo signal; substracting said modulated estimate signal from the modulated signal at the receiving side before said reception system obtaining in this way an error signal used as input signal of said reception system and as correction signal which concurs to update said first and second series of coefficients.

and second series of coefficients.

It is a further object of the present invention the device implementing said method.

The invention is now described with reference to the annexed drawings in which:

- Fig. 1 shows a transmitting and receiving device, in which the echo-canceller, object of the present invention is used;

- Fig. 2 shows a diagram of the phase differences between determined signals in transmission;

- Fig. 3 shows the detailed block diagram of the echo canceller denoted by CE in Fig. 1.

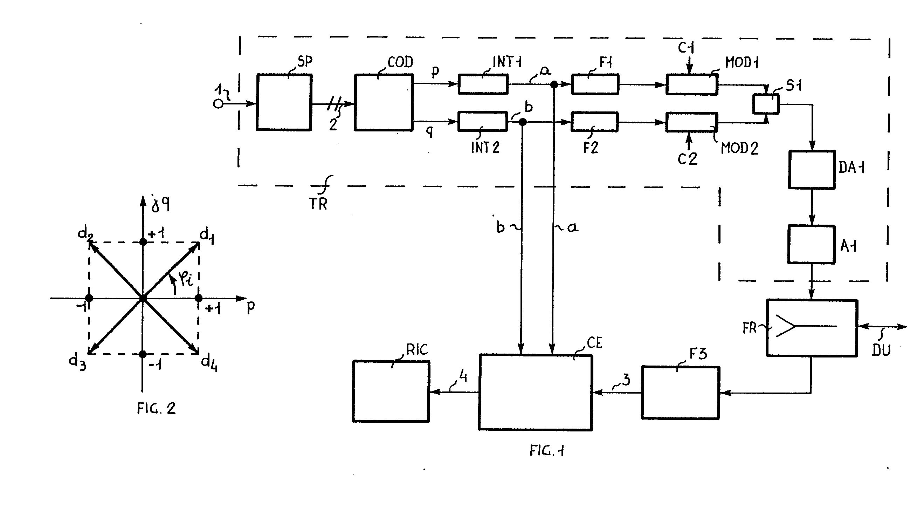

For a better understanding of the echo-cancelling method, object of the present invention, some remarks on the signal processing in transmission ought to be made with reference to Figures 1 and 2.

The dotted line in Fig. 1 denotes the block diagram of a transmitter TR apt to send, via a usual telephone hybrid FR, a modulated signal on the line DU.

The same line DU is also used to make a modulated signal reach a receiver RIC, said modulated signal coming from the modem placed at the other end of the line and not shown in Fig. 1.

Telephone-hybrid implementing technique is well-known to the skilled in the art, therefore further details are unnecessary.

The signal coming from the other modem is sent through the hybrid FR and a pass-band filter F3 to an echo canceller CE via wire 3 and then to the receiver RIC via wire 4.

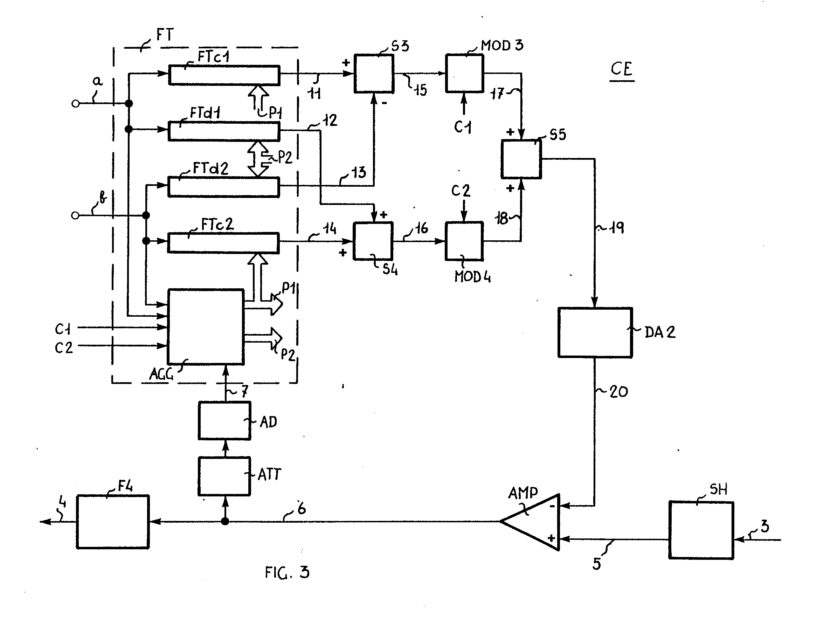

The echo-canceller CE is the main object of the present invention and will be described hereinafter in connection with Fig. 3.

Transmitter TR and receiver RIC are of known type, e. g. those which have been described in the paper "Design and simulation of a digital DPSK modem for a 80 kbit/s full-duplex transmission on the subscriber loop" (di Tria, Montagna, Zoso), Proc. ICC 81, Denver, 14-17 June 1981.

In fact the transmitter and the receiver of a FDM data transmissionmodem have been employed, by using only the lower channel of the two available. Since a modulated signal is to be transmitted on the loop, a particularly reliable and noise resistent modulation system has been chosen.

Therefore a four-stage differential phase-shift keying (DPSK) has been used, which has been implemented with a QAM (quadrature amplitude modulation) transmitter.

With reference to Fig. 1, the serial data flow received at the input on wire 1 is converted,in the converter SP,into parallel form, thus obtaining at the output a series of four-level symbols, (dibits), on the two wires forming the connection 2, having a rate whose value is equal to half the bit rate at the input over wire 1. The four levels of said dibits in the differential phase modulation are associated with four corresponding phase jumps

$$\Delta \varphi_n = n \cdot \frac{\pi}{2} , \text{ where } n = 0, 1, 2, 3.$$

In order to calculate the phase $\varphi n$ to be transmitted, a coder COD, at whose input a modulo-4 adder is present, is supplied with said dibits. The two bits resulting from the addition are coded in such a way that at the output of COD a new dibit d is present, on two wires p and q respectively, whose signals may be interpreted, according to the sign rule, as sinus and cosinus of the phase to be sent over the line, representative of the originary dibit present on connection 2.

The corresponding phase diagram is shown in Fig. 2: two samples p and q, having each the value + 1 or - 1 dependent on the binary value of the two bits of the dibit to transmit, are made to correspond to each dibit d: In the non-limiting example of solution described here, the following correspondance has been used:

$$d_1 = 00 \quad p = + 1, \ q = + 1$$
$$d_2 = 01 \quad p = - 1, \ q = + 1$$
$$d_3 = 11 \quad p = - 1, \ q = - 1$$
$$d_4 = 10 \quad p = + 1, \ q = - 1$$

Then the plane of the axes p and q can be interpreted as a complex plane where the projections on the axis p represent the real or in-phase component of vectors d, and the projections on the axis q represent the imaginary or quadrature component of vectors d.

Hereinafter signals p and q will be defined as in phase and quadrature projections, respectively, of the data to be trasmitted.

Still with reference to Fig. 1, the modulation of signals p and q is chiefly obtained by shaping their spectra so that they may approximate the spectral characteristics according to Nyquist's criteria, concerning intersymbol interference, with a 50% sinusoidal "roll-off".

To this purpose sequences p and q are interpolated by two identical interpolators, INT 1 and INT 2 respectively, operating with an interpolation factor that in the non-limiting example here described is equal to 8, and then at a sampling frequency equal to 8 times the symbol frequency at the input of the interpolators themselves. At the output of the interpolators there are obtained on wires a and b respectively the sequencies a(i), b(i) composed of samples of sequences p and q separated each by seven null samples.

The sequences a(i), b(i), which will be hereinafter defined respectively as in-phase and quadrature projections of interpolated data to be transmitted, are then sent to shaping filters F1 and F2 and finally to amplitude modulators MOD1 and MOD2 respectively. In addition said signals a(i), b(i) are sent to the echo-canceller CE.

The two outputs of the modulators are then added in the adder S1, whose output signal is supplied to a digital-to-analog converter DA1 and to an amplifier A1 which transmits the modulated signal, through the hybrid FR, on the line DU. Then the sequences of samples a(i), b(i), once filtered, amplitude modulate the carrier signals C1 and C2 respectively, applied to modulators MOD1 and MOD2 respectively. The two carrier signals are of the kind

$$C1 = \cos \omega_c \cdot T \cdot i$$
$$C2 = \sin \omega_c \cdot T \cdot i$$

where $\omega_c$ is the carrier pulsatance, T is the sampling time of the interpolators, i represents the i-th sample considered and is an integer number representing the time variable that in that case assumes discrete values.

In the present embodiment an 80 kbit/s bit rate has been used at the input on wire 1, with a consequent 40 kbaud rate on connection 2.

The carrier frequency $f_c$ is 80 kHz, while the sampling frequency is 320 kHz, and a 60 kHz bandwidth of the modulated signal has been obtained, so as to occupy the frequency band ranging from 50 to 110 kHz. By the choice of a ratio equal to four between sampling and carrier frequency, we obtain $\omega_c \cdot T = \pi/2$.

By this choice, the modulators do not carry out an actual modulation, but force to zero the modulating signal or multiply it by the value + 1 or by the value -1. Then the modulated signal outgoing from adder S1 is practically directly obtained from the two sequences of baseband samples outgoing from filters F1 and F2, alternatively taking the in - phase and quadrature samples, in case with changed sign.

Hence the signal outgoing from the transmitter is of the kind:

$$s'(i) = \sum_j u(j) \cdot a(i-j) \cdot \cos \omega_c \cdot T \cdot i + \sum_j u(j) \cdot b(i-j) \cdot \sin \omega_c \cdot T \cdot i$$

where: j is the current variable which takes into account the taps of the transversal filters of the transmitter;

   u(j) are discretized samples of the impulse response of the transmission filters.

The echo-signal outgoing from the hybrid FR towards the receiver of Fig. 1, comprising the signal portion directly coming from the transmitter and the sum signal of the reflections occured on the line DU, is of the kind:

$$s(i) = \left[\sum_k g_p(k) \cdot a(i-k) - \sum_k g_q(k) \cdot b(i-k)\right] \cdot \cos \omega_c \cdot T \cdot i +$$
$$+ \left[\sum_k g_q(k) \cdot a(i-k) + \sum_k g_p(k) \cdot b(i-k)\right] \cdot \sin \omega_c \cdot T \cdot i$$

where $g_p(k)$ and $g_q(k)$ are in-phase and quadrature components of the transformation g(k) introduced on signal s'(i) by the whole equivalent echo-channel.

The summations present on the expression of s(i) are extended to an integer number k different from number i to which summations of the expression of s'(i) are extended, to take into account all the echo contributions present at the receiving side and, after all, the length of the impulse response of the overall equivalent echo-channel, and represent the convolution products between the signals a(i), b(i) and the magnitudes $g_p(k)$, $g_q(k)$.

Of course the determination of the value of the magnitudes $g_p(k)$, $g_q(k)$, depends on the particular transmission line consi‾dered and therefore it cannot be carried out once for all; in addition said magnitudes may change in the time.

The signal outgoing from hybrid FR forwarded to the receiver will then be the sum of the signal s(i), relating to the overall echo channel, and of the useful signal coming from the transmitter of the modem placed at the other end of the line DU. The problem is then that of embodying a device removing from the overall signal the unwanted portion s(i).

The echo-cancelling method, object of the present inven‾tion, will be hereinafter described.

Above all a signal is generated, hereinafter to be denoted by u(i), whose expression may approximate as close as possible that of s(i), and is subtracted from the total signal before receiver RIC, then directly from the passband signal, so as to obtain at the input of RIC the so-called error signal, which will hereinafter be referred to as e(i), basically purified from the echo-signal.

The expression of u(i) will be of the kind:

$$u(i) = \left[\sum_k c_k(i) \cdot a(i-\kappa) - \sum_k d_k(i) \cdot b(i-\kappa)\right] \cdot \cos \omega_c \cdot T \cdot i +$$
$$+ \left[\sum_k d_k(i) \cdot a(i-\kappa) + \sum_k c_k(i) \cdot b(i-\kappa)\right] \cdot \sin \omega_c \cdot T \cdot i$$

In u(i) the two expressions put in square brackets can thus be defined as in-phase and quadrature components respectively, with respect to the above-defined phase reference, of the equivalent baseband echo signal. These two components are then multiplied by the already--defined terms C1 and C2 respectively, and added to each other to obtain a signal estimating the echo-signal directly in passband.

In the expression of u(i) the already defined number k can vary from zero to (L - 1), where L is the number of discrete instants into which the curve of impulse response of the equivalent echo channel is subdivided, on which instants that pulse response will be copied.

Terms $c_k(i)$ and $d_k(i)$ approximate the values of $g_p(k)$ and $g_q(k)$ respectively, and in addition ought to be continously updated in order to follow the time variations of $g_p(k)$ and $g_q(k)$.

There have been chosen the known technique of approxima-tion by mean-square error minimization and an updating law which is based on the known gradient method, so as to obtain the following expressions:

$$c_k(i+1) = c_k(i) + \gamma \cdot e(i) \left[ a(i-k) \cdot \cos \omega_c T i + b(i-k) \cdot \sin \omega_c T i \right]$$

$$d_k(i+1) = d_k(i) + \gamma \cdot e(i) \left[ a(i-k) \cdot \sin \omega_c T i - b(i-k) \cdot \cos \omega_c T i \right]$$

The values of coefficients $c_k$ and $d_k$ at a determined sampling instant $(i+1)$ are obtained from said coefficient values at the preceding sampling instant $(i)$, changed by a correction factor given by the product of the error signal $e(i)$, present at the input of RIC, taken at the instant $(i)$ and weighted by a numerical factor $\gamma$, by a term comprising the sum or the difference of the signals $a(i-k)$ and $b(i-k)$, taken at the instant $(i-k)$, in - phase or quadrature modulated.

The digital factor $\gamma$ is an attenuation coefficient necessary to comply with the stability conditions of the processes of approximation and updating of the coefficients $c_k$ and $d_k$ and must have a value in the range 0 to $1/L$.

In addition owing to the conditions of convergence rate of said process and of residual noise under steady state conditions, $\gamma$ is to be chosen in the range zero to $1/2L$; in particular by decreasing $\gamma$ the convergence process becomes slower, but more accurate, i.e. the residual error due to the uncancelled echo, assimilable to noise on the input signal, is progressively diminishing.

The analytical expression connecting the signal/noise ratio (S/N) under steady state conditions to the value of $\gamma$ is of the kind:

$$\frac{S}{N} = 10 \cdot \log\left(\frac{1}{L \cdot \gamma} - 1\right)$$

Practically $\gamma$ is assigned the least possible value compatible with the requirement that the echo canceller converges within a certain time interval.

The updating of coefficients $c_k$, $d_k$ has not to be necessaryly carried out at each sampling instant (i). In this case in the expressions of $c_k$, $d_k$ the variable (i) becomes (m·i), with the positive integer m chosen taking into account the interpolation factor in transmission, so that all the coefficients are periodically updated.

The adaptive process becomes slower, while keeping accuracy characteristics unchanged, and allowing a number of circuit simplifications, as will be seen hereinafter.

The above-described method allows the generation of signal u(i) starting from signals a(i) and b(i), the subtraction of u(i) from the signal before the receiver, thus obtaining the error signal e(i) used as input signal for the receiver, and the determination of the coefficients $c_k$ and $d_k$ of the expression of u(i), with the just-described technique, by using for the coefficients updating, which can be carried out at time intervals equal to m·i, an estimate of the echo signal e(i), weighted by the attenuation coefficient $\gamma$ .

Operating in this way the input signal of the receiver is completely freed from the echo-signal, with consequent receiver simplifications.

Then, particularly-complicated receiver structures are not required and the same receiver as the one which would be used in a four-wire or frequency-division full-duplex transmission system can advantageously be used.

In addition there are no particular limitations to the maximum tolerable ratio at the input of the receiver between echo and total signal, because the echo signal is completely eliminated before the receiver, with the only exception of a residual minimum which is known and can be controlled a priori.

With reference to Fig. 3, an echo-cancelling device is now described, which implements the above described method.

Signals $a(i)$ and $b(i)$ on wires a and b are supplied to a block FT, dotted in the Figure, which includes four digital transversal filters FTc1, FTd1, FTc2, FTd2.

The wire a is connected at the input of filters FTc1, FTd1, while wire b is connected at the input of filters FTd2, FTc2.

Said transversal filters implement the summation terms of the expression of $u(i)$.

In particular FTc1 implements the first summation term: FTd1 the third; FTd2 the second, FTc2 the fourth.

Said four transversal filters have L taps and their implementation is not a problem to the person skilled in the art once the expression of the signal $u(i)$ has been defined, as actually has been done.

Block FT still comprises circuit AGG, which updates the various values of coefficients $c_k(i)$, $d_k(i)$ for the transversal filters; circuit AGG receives at its inputs the signals $a(i)$, $b(i)$, C1, C2, already previously defined also in connection with Fig. 1, and the signal on wire 7, which will be mentioned later, and supplies at the output, on connection P1, made up with L wires, the updating for coefficients $d_k(i)$, in accordance with the expressions of $c_k$ and $d_k$ previously defined.

In the expressions $c_k$ and $d_k$ there are terms such as: $a(i - k) \cdot \cos \omega_c \cdot T \cdot i$, i.e. terms obtained by modulating the two carriers C1 and C2 by the samples of the signals $a(i - k)$, $b(i - k)$, taken at the instants $(i - k)$.

As previously described, owing to the particular value assumed by $\omega_c \cdot T = \pi/2$, the modulations are advantageously replaced by multiplications of the current values of a(i), b(i) by terms + 1, or 0, or - 1, depending on the current value assumed by (i).

The embodiment of the circuit AGG is not a problem to the person skilled in the art, once defined the expressions relating to the signals applied to its inputs as well as those relating to the coefficient updating.

Then the signals on conncetion P1 are sent to block FTc1, FTc2, while those on connection P2 are sent to blocks FTd1, FTd2.

The output 11 of filter FTc1 and the output 13 of filter FTd2 are connected to a usual adder S3 which supplies at the output on wire 15 the difference between the signals 11 and 13.

The output 12 of filter FTd1 and the output 14 of filter FTc2 are connected to a conventional adder S4 which supplies at the output on wire 16 the sum of signals 12 and 14.

The signal on wire 15 is sent to a first input of a conventional amplitude modulator MOD3, as a signal modulating the carrier signal C1, sent to its second input: the carrier signal C1 has already been defined in connection with Fig. 1.

The signal on wire 16 is sent to a first input of an amplitude modulator MOD4, basically equal to MOD3, as a signal modulating the carrier signal C2, sent to its second input: the signal C2 has been defined in connection with Fig. 1.

The signal outgoing from MOD3 is sent through wire 17 to a first input of a conventional adder S5, while the signal outgoing from MOD4 is sent through wire 18 to a second input of said adder S5.

S5 sums the signals at its inputs, considered both as positive, and supplies at the output on wire 19 a signal basically equal to u(i). Said signal is then sent to a conventional digital-to-analog converter DA2 whose output signal is supplied, through wire 20, at the inverting input of a conventional differential amplifier AMP.

The signal on wire 3, coming from block F3 (fig. 1), is sent to a conventional sample and hold circuit, whose output signal is sent, through wire 5, to the non - inverting input of amplifier AMP.

Circuit blocks DA2 and SH make the signals on wires 19 and 3 compatible with one another.

Then the signal on wire 20 represents the estimated echo signal which is to be subtracted from the signal on wire 5, which on the contrary represents the total signal, coming from the hybrid FR (Fig. 1) . The signal on wire 6 (Fig. 2) at the output of the differential amplifier AMP represents the error signal $e(i)$, supplied to the low-pass filter F4 whose output, on wire 4, represents the useful signal sent to the input of the receiver RIC (Fig. 1).

The signal on wire 6 (Fig. 2) is also sent to an attenuator ATT which attenuates it by the factor $\gamma$, previously defined; the output of ATT is then supplied to the analog-to-digital converter AD, whose output on wire 7 represents the signal $\gamma . e(i)$. Said signal on wire 7 is then supplied to the already mentioned circuit AGG.

Along the path of the signal from wire 6 to wire 7 it is worth noticing that attenuator ATT precedes the converter AD. Since attenuating a signal means diminishing its maximum amplitude excursions, in our case it stands for a reduction in the cost and complexity for implementing block AD, because each signal sample at its input can be represented by a smaller bit number at the output, being smaller the number of voltage levels necessary to quantize the input analog signal.

In the particular non limiting example here described the following values have been chosen:

$$\gamma = \frac{1}{256 \cdot L} , \ m = 1$$

Modifications and variations can be made to the example of embodiment here described without going out of the scope of the invention.

Patent Claims

1.  Passband echo-cancelling method in a transmission and reception system of phase-modulated data signals on a two-wire line, said transmission system providing the splitting of the baseband data signal, prior to modulation, into a first and a second compo nents, said first and second components being in-phase and quadrature projections, with respect to a determined phase referen ce, of said baseband data signal and having a determined bit period, characterized in that it comprises the steps of: generating a first and a second estimate signals of a baseband equivalent echo-signal, said first and second estimate signals being in-pha se and quadrature components, with respect to said phase reference, of said baseband equivalent echo-signal and being extracted by means of the convolution products of said first and second baseband data signal components by a first and second series of coefficients subjected to a periodic updating and identified by a current-variable k; amplitude modulating a first carrier signal $(C1)$ by said first estimate signal; amplitude modu lating a second carrier signal $(C2)$ in quadrature with respect to said first carrier signal, by said second estimate signal; summing the two modulated signals so as to generate a modulated estimate signal of the passband echo signal; subtracting said modulated estimate signal from the modulated signal at the receiving side before said reception system, obtaining in this way an error signal used as input signal of said reception system and as correction signal which concurs to update said first and second series of coefficients.

2.  Passband echo-cancelling method according to claim 1, characterized in that said periodic updating provides for the correction of the value assumed by each of said coefficients, at the

subsequent correction instant, by an additional term, to be added to the value assumed by said coefficients at the present correction instant, said additional term being given by the pro duct of three factors of which the first is said error signal, the second is an attenuation coefficient, and the third is, for the coefficients of the first series, the sum of the product of said first component, taken k preceding bit periods, by said first .carrier signal and of the product of said second component, taken k preceding bit periods, by said second carrier signal, while, for the coefficients of the second series, it is the difference between the product of said first component, taken k preceding bit periods, by said second carrier signal, and the product of said second component, taken k preceding bit periods, by said first carrier signal.

3. Passband echo-cancelling method according to claim 2, characterized in that said correction instants are distant m bit periods (with m positive integer) of said first and second components.

4. Passband echo-cancelling method according to any of claims 1 to 3, characterized in that said first estimate signal is obtained from the difference between a first summation of the products of each coefficient of said first series by said first component, taken k previous bit periods, and a second summation of the products of each coefficient of said second series by said second component, taken k preceding bit periods, and said second estimate signal is obtained from the sum between a third summation of the products of each coefficient of said second series by said first component, taken k preceding bit periods, and a fourth summation of the products of each coefficient of said first series by said second component, taken k preceding bit periods.

5. Echo - cancelling device apt to embody the method according to claims 2 or 3, and possibly additionally claim 4, characterized in that it comprises:

- digital filtering means (FT, S3, S4), which receive at the inputs said first and second components of the baseband data signal, said product of said error signal by said attenuation coefficient, and said first and second carrier signal, and are apt to supply at their outputs said first and second estimate signal;

- a first modulator (MOD3) apt to amplitude-modulate said first carrier signal by said first estimate signal;

- a second modulator (MOD4) apt to amplitude modulate said second carrier signal by said second estimate signal,

- a first adder (S5) apt to add the signals outgoing from said first and second modulators;

- a digital-to-analog converting circuit (DA2), able to convert into analog form the digital signal outgoing from said first adder;

- a sample and hold circuit (SH), able to quantize the voltage levels of said modulated signal at the receiving side;

- a differential amplifier circuit (AMP) able to supply at the output (6) said error signal obtained as a difference between the signal outgoing from said sample and hold circuit and the output signal of said digital-to-analog converting circuit (DA2);

- an attenuating circuit (ATT) apt to multiply by said attenuation coefficient, said error signal supplied at its input;

- an analog-to-digital converting circuit (AD), apt to convert into digital form the analog signal outgoing from said attenuating circuit (ATT) and to supply said digital filtering means with said product;

- a low-pass filter (F4), to the input of which said error signal is sent and whose output is supplied to said reception system (RIC).

6. Device according to claim 5, characterized in that said digital filtering means comprise:

- a first digital transversal filter (FTc1) apt to embody said first summation term, receiving at the input said first component and having as coefficients said coefficients of the first series;

- a second digital transversal filter (FTd1), apt to embody said third summation term, receiving at the input said first component and having as coefficients said coefficients of the second series;

- a third digital transversal filter (FTd2) apt to embody said second summation term, receiving at the input said second component and having as coefficients said coefficients of the second series;

- a fourth digital transversal filter (FTc2) apt to embody said fourth summation term, receiving at the input said second component and having as coefficients the coefficients of said first series;

- a second adder (S3) apt to carry out the difference between the signals outgoing from said first and second digital transversal filter, supplied at its inputs, and at whose output said first estimate signal is present;

- a third adder (S4) apt to carry out the addition of the signals outgoing from said third and fourth digital transversal filter, supplied at its inputs, and at whose output said second estimate signal is present;

- an updating circuit (AGG) of the coefficients of said first and second series, to whose inputs there are sent said product term, said first and second components, and said first and second carrier signals, and at whose outputs there are present said additional terms, one per each coefficient, supplied by a first connection (P1) to said first and fourth transversal

0080201

filter and by a second connection (P2) to said second and third transversal filter.

FIG. 1

SP

COD

INT 1

INT 2

F1

F2

C1

C2

MOD 1

MOD 2

S1

DA1

A1

FR

DU

F3

CE

RIC

TR

p

q

a

b

FIG. 2

$d_2$

$d_1$

$d_3$

$d_4$

$\varphi_i$

+1

-1

+1

-1

p

q

Dom. N. 68521-A/81

FIG. 5

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-2 052 928 (CIT-ALCATEL) *Page 4, lines 14-24; page 8, line 22 - page 9, line 32; page 14, claim 4; figures 2,3* | 1-5 | H 04 B 3/23 |
| A |  | 6 | |
| A | TELECOMMUNICATIONS & RADIO ENGINEERING, vol. 32/33, no. 12, December 1978, pages 29-33, Washington (USA); V.F.BULYANOV et al.: "Digital moderns for VF channels". *Page 30, lines 1-23; figure 1* | 6 | |

TECHNICAL FIELDS SEARCHED (Int. Cl. 3)

H 04 B 3/23
H 04 L 27/00

The present search report has been drawn up for all claims

| Place of search THE HAGUE | Date of completion of the search 11-02-1983 | Examiner STRASSEN TH.W. |
|---|---|---|